(19) Europäisches Patentamt
European Patent Office
Office européen des brevets

(11) **EP 3 392 773 B1**

(12) **FASCICULE DE BREVET EUROPEEN**

(45) Date de publication et mention
de la délivrance du brevet:
**09.10.2019 Bulletin 2019/41**

(21) Numéro de dépôt: **18167418.5**

(22) Date de dépôt: **16.04.2018**

(51) Int Cl.:
*G06F 11/16* (2006.01)    *H03K 19/007* (2006.01)
*H03K 19/177* (2006.01)    *G01R 31/317* (2006.01)
*G01R 31/3177* (2006.01)

(54) **CIRCUIT INTEGRE NUMERIQUE PROTEGE CONTRE LES ERREURS TRANSITOIRES**

DIGITALER INTEGRIERTER SCHALTKREIS, DER GEGEN TRANSIENTE FEHLER GESCHÜTZT IST

DIGITAL INTEGRATED CIRCUIT PROTECTED AGAINST TRANSIENT ERRORS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.04.2017 FR 1700443**

(43) Date de publication de la demande:
**24.10.2018 Bulletin 2018/43**

(73) Titulaire: **THALES**
**92400 Courbevoie (FR)**

(72) Inventeurs:
• **OSTER, Yann Nicolas Pierre**
**31037 Toulouse (FR)**
• **BARRES, Loïc Pierre**
**31037 Toulouse (FR)**

(74) Mandataire: **Hammes, Pierre et al**
**Marks & Clerk France**
**Immeuble Visium**
**22, avenue Aristide Briand**
**94117 Arcueil Cedex (FR)**

(56) Documents cités:
**US-A1- 2004 219 739    US-A1- 2011 022 903**
**US-B1- 9 575 862**

**Description**

L'invention concerne le domaine des circuits intégrés numériques, par exemple des circuits à logique programmable tels que les circuits FPGA (Field Programmable Gâte Array) ou des circuits intégrés propres à une application ou ASIC (Application Specific Integrated Circuit).

Plus précisément, l'invention porte sur un circuit intégré numérique qui intègre un mécanisme de protection contre les erreurs transitoires.

Les circuits intégrés numériques peuvent être soumis à des radiations ou particules ionisantes qui engendrent des erreurs transitoires sur le circuit et perturbent son fonctionnement nominal.

Dans le cas d'applications aéroportées ou aérospatiales, les circuits intégrés numériques sont exposés aux effets des radiations ionisantes provenant de l'environnement extérieur. Dans une moindre mesure, même pour des applications embarquées dans des systèmes au sol, les boîtiers dans lesquels les circuits sont encapsulés génèrent des radiations alpha qui engendrent des erreurs avec une occurrence d'autant plus élevée que les circuits sont complexes et comprennent un très grand nombre de portes logiques.

Les effets produits par les radiations sur un circuit peuvent être progressifs ou singuliers. Dans le premier cas, les défauts générés par les radiations sont progressivement accumulés jusqu'à générer des erreurs à partir d'un certain seuil de radiations accumulées. Dans le second cas, une seule particule ionisante ou un seul évènement peut générer un défaut immédiat qui peut affecter les mémoires, les bascules ou les portes logiques que contient le circuit. Si le défaut génère une inversion d'un bit, on parle de « single event upset » (SEU), si au contraire il impacte plusieurs bits, on parle de « multiple-bit upset » (MBU). Les effets des radiations peuvent prendre la forme de parasites ou impulsions qui se propagent dans le circuit et affectent la logique combinatoire au niveau d'un fil électrique ou d'une porte logique (on parle de « single event transient » (SET) dans ce cas). Ces erreurs (SEU, MBU, SET) sont réversibles et n'affectent que l'interprétation des signaux électriques dans la logique séquentielle et combinatoire, avec pour conséquences, des erreurs logiques qui impactent le circuit.

Le document US 2004/219739A1 décrit un circuit de sauvegarde et de reconstitution des états passés d'une bascule lorsque des erreurs ont été détectées par des moyens de détection.

Le problème posé par l'invention consiste à protéger un circuit numérique contre les erreurs réversibles induites par les radiations, sans trop pénaliser la complexité logique du circuit et la dissipation, et de manière transparente pour le service ou la mission rendu(e) par le circuit, notamment concernant le rythme d'exécution des traitements, et en particulier sans interruption de service.

Plusieurs solutions permettant de lutter contre les effets des radiations sur un circuit intégré numérique sont connues.

Une première solution consiste à utiliser un blindage métallique pour limiter l'interaction des particules ou radiations ionisantes avec le substrat de la puce du circuit intégré. Pour des raisons d'encombrement et de masse, l'épaisseur du blindage doit cependant rester limitée ce qui ne permet pas de protéger totalement le circuit des erreurs transitoires. Ainsi, cette première solution s'avère insuffisante.

Une deuxième solution consiste à utiliser une technologie de silicium sur isolant (SOI) en alternative au silicium brut, pour réaliser le circuit intégré. Cette technologie permet de réduire les erreurs transitoires grâce à l'utilisation de substrats fortement résistifs, cependant elle engendre un coût de fabrication plus élevé sans supprimer totalement les effets des radiations.

Une troisième solution connue est basée sur l'emploi d'une bibliothèque spécifique de portes logiques qui intègre nativement un certain niveau de redondance grâce à un design spécifique des portes logiques. Cette solution dépend du fabricant de circuits intégrés et correspond à une technologie particulière. Le design des portes logiques intègre des marges supérieures sur la conception des transistors, avec des capacités plus fortes, des temps de montée plus lents, des cellules pour filtrer les impulsions parasites et des redondances dans les structures bouclées afin de rendre la logique tolérante aux impulsions parasites. Un inconvénient de cette solution est qu'elle est spécifique à un type de technologie donné présentant ainsi une offre limitée et des performances amoindries. En effet, le fait d'intégrer de la redondance dans les structures logiques induit une place occupée plus importante, une consommation plus élevée et une vitesse d'exécution plus lente.

Une autre solution consiste à implémenter de la redondance au niveau fonctionnel du circuit, de son architecture. Par exemple, il est connu de protéger le contenu de mémoires par l'utilisation de codes détecteurs et correcteurs d'erreurs, tel que le code de Hamming étendu.

Pour protéger les portes logiques d'un circuit, on connaît également la technique dite de triplication modulaire et de vote majoritaire (TMR) qui permet de corriger une erreur sur une instance d'une fonction parmi un jeu de trois instances de la même fonction opérant en parallèle. Ce principe peut être appliqué au niveau d'une bascule ou d'un ensemble logique combinatoire ou encore d'une fonction. Il permet de protéger la logique séquentielle et la logique combinatoire contre une erreur intervenant sur l'une des trois instances. Par contre, si deux erreurs interviennent simultanément sur deux instances, elles ne peuvent être corrigées. Par ailleurs, un inconvénient de cette solution est qu'elle s'avère très coûteuse en complexité logique et en dissipation.

On connaît également les techniques de détection et correction d'erreurs transitoires décrites dans l'article « Power consumption improvement with residue code for fault tolerance on SRAM FPGA, Frédéric Amiel et. Al, ISEP ». Cet article présente des méthodes de détection et de correction d'erreurs transitoires par réplication de la fonction et comparaison des résultats ainsi que des méthodes de détection d'erreurs par projection modulo de la fonction et comparaison des résultats.

On connaît aussi l'article « Designing fault-tolerant techniques for SRAM-based FPGAs, F. Gusmao de Lima Kastensmidt, IEEE design & test of computers » qui présente l'effet des radiations sur des circuits intégrés FPGA SRAM ainsi qu'une implantation classique de protection par triplication modulaire et vote majoritaire TMR. Cet article propose également une technique de protection de la logique combinatoire moins coûteuse que la méthode TMR avec :

- une réplication des circuits combinatoires pour détecter une erreur,
- une modification de ces circuits pour pouvoir rejouer en cas d'erreur le calcul sur un cycle supplémentaire à partir des opérandes après codage, le résultat étant décodé puis comparé avec le premier résultat afin d'identifier quelle instance parmi les deux est en erreur.

La logique séquentielle reste protégée par méthode TMR.

Cette technique de protection présente l'inconvénient d'être trop coûteuse en ressources logiques du fait de la modification en profondeur de toute la logique combinatoire et de la méthode TMR pour protéger les bascules, avec une réduction significative de la vitesse des circuits.

L'invention vise à résoudre les limitations des solutions de l'art antérieur précitées en proposant une solution de protection d'un circuit intégré numérique qui soit faiblement complexe et qui permette de protéger toutes les ressources logiques d'une fonction implémentée par un circuit sans interrompre le service et sans engendrer d'impact sur le rythme d'exécution de la fonction tel qu'observable depuis les interfaces d'entrée et de sortie.

L'invention a pour objet un circuit intégré numérique comprenant un ensemble logique comprenant un bloc logique fonctionnel, une unité logique de détection d'erreurs transitoires impactant le bloc logique fonctionnel, une mémoire FIFO d'entrée pour alimenter en échantillons le bloc logique fonctionnel, une mémoire FIFO de sortie pour recevoir des échantillons en sortie du bloc logique fonctionnel, une mémoire tampon alimentée en échantillons par la mémoire FIFO d'entrée, et une unité logique de contrôle apte à commander, l'accès en lecture dans la mémoire FIFO d'entrée et l'accès en écriture dans la mémoire FIFO de sortie et configurée pour, lorsqu'une erreur est détectée par l'unité logique de détection d'erreurs transitoires, réinitialiser l'unité logique de détection d'erreurs transitoires et le bloc logique fonctionnel, suspendre l'accès en écriture dans la mémoire FIFO de sortie et basculer l'entrée du bloc logique fonctionnel vers la sortie de la mémoire tampon.

Selon un aspect particulier, le circuit intégré numérique selon l'invention comprend un multiplexeur pour connecter l'entrée du bloc logique fonctionnel à la mémoire FIFO d'entrée ou à la mémoire tampon.

Selon un aspect particulier de l'invention, l'unité logique de contrôle est configurée pour commander le multiplexeur en fonction du résultat de l'unité logique de détection d'erreurs.

Selon un aspect particulier de l'invention, la fréquence de l'horloge au sein de l'ensemble logique est supérieure à la fréquence moyenne d'écriture dans la mémoire FIFO d'entrée.

Selon un aspect particulier de l'invention, l'activité au sein de l'ensemble logique est rendue irrégulière.

Selon un aspect particulier de l'invention, le rythme Ra des traitements au sein de l'ensemble logique est commandé par l'unité logique de contrôle au moyen d'un signal d'activation.

Selon un aspect particulier de l'invention, le rythme Ra des traitements au sein de l'ensemble logique est commandé par l'unité logique de contrôle en fonction du niveau de remplissage de la mémoire FIFO de sortie ou d'une détection d'erreur signalée par l'unité logique de détection d'erreurs transitoires.

Selon un aspect particulier de l'invention, l'unité logique de contrôle est configurée pour modifier le rythme Ra des traitements au sein de l'ensemble logique en fonction d'une comparaison du niveau de remplissage de la mémoire FIFO de sortie à au moins trois seuils.

Selon un aspect particulier de l'invention, la mémoire FIFO d'entrée et la mémoire FIFO de sortie sont dimensionnées pour stocker au moins $p*L_p$ données, avec p le nombre maximum d'erreurs consécutives tolérables impactant en rafale le bloc logique fonctionnel et $L_p$ une estimée de la latence du bloc logique fonctionnel.

Selon un aspect particulier de l'invention, la taille de la mémoire tampon dépend de la latence du bloc logique fonctionnel.

Selon un aspect particulier de l'invention, l'unité logique de détection d'erreurs transitoires comprend un bloc logique fonctionnel redondant et une unité de comparaison des résultats produits respectivement par le bloc logique fonctionnel et le bloc logique fonctionnel redondant.

Selon un aspect particulier de l'invention, le bloc logique fonctionnel est à latence constante.

Selon un aspect particulier de l'invention, le bloc logique fonctionnel est pourvu d'au moins une seconde entrée et d'au moins une seconde sortie pour, lorsqu'elles sont reliées entre elles, réaliser au moins une boucle de réaction externe, ledit ensemble logique comprend au moins une seconde mémoire tampon alimentée en échantillons par ladite au moins une seconde sortie du bloc logique fonctionnel, l'unité logique de contrôle étant configurée pour, lorsqu'une erreur est détectée par l'unité logique de détection d'erreurs transitoires, basculer ladite au moins une seconde entrée du bloc logique fonctionnel de ladite au moins une seconde sortie du bloc logique fonctionnel vers la sortie de ladite au moins une seconde mémoire tampon.

Selon un aspect particulier de l'invention, ledit ensemble logique comprend au moins un second multiplexeur pour connecter ladite au moins une seconde entrée du bloc logique fonctionnel à ladite au moins une seconde sortie du bloc logique fonctionnel ou à ladite au moins une seconde mémoire tampon.

Selon un aspect particulier de l'invention, l'unité logique de contrôle est configurée pour commander le second multiplexeur de chaque ensemble en fonction du résultat de l'unité logique de détection d'erreurs.

Selon une variante particulière de l'invention, le circuit intégré numérique selon l'invention comprend une pluralité desdits ensembles logiques et dans lequel une mémoire FIFO d'entrée d'un premier ensemble logique est une mémoire FIFO de sortie pour un deuxième ensemble logique situé en amont.

D'autres caractéristiques et avantages de la présente invention apparaîtront mieux à la lecture de la description qui suit en relation aux dessins annexés qui représentent :

- la figure 1, un synoptique d'un circuit intégré numérique selon l'invention, adapté aux fonctions à latence constante
- les figures 2a et 2b, deux exemples d'application de l'invention à un ou plusieurs blocs de traitement fonctionnel,
- la figure 2c, une illustration, pour l'exemple de la figure 2b, d'une séquence d'initialisation du circuit protégé par l'invention,
- les figures 3a et 3b, deux diagrammes illustrant respectivement le niveau de remplissage d'une mémoire FIFO de sortie et d'une mémoire FIFO d'entrée au cours de l'exécution de l'invention,
- la figure 4a, un schéma d'un circuit comprenant plusieurs blocs logiques fonctionnels à latence constante,
- la figure 4b, un schéma d'un circuit comprenant plusieurs blocs logiques fonctionnels avec boucle de réaction,
- la figure 5, un synoptique d'une variante de réalisation du circuit intégré numérique selon l'invention adapté aux fonctions avec boucle de réaction,
- les figures 6a,6b,6c, trois schémas illustrant la transformation d'un bloc logique fonctionnel comprenant une boucle de réaction interne en un bloc logique fonctionnel pour lequel la boucle de réaction est rendue externe et ouvrable.

L'invention consiste à implémenter sur le circuit intégré numérique, un mécanisme de protection contre les erreurs transitoires pour chaque fonction du circuit à protéger.

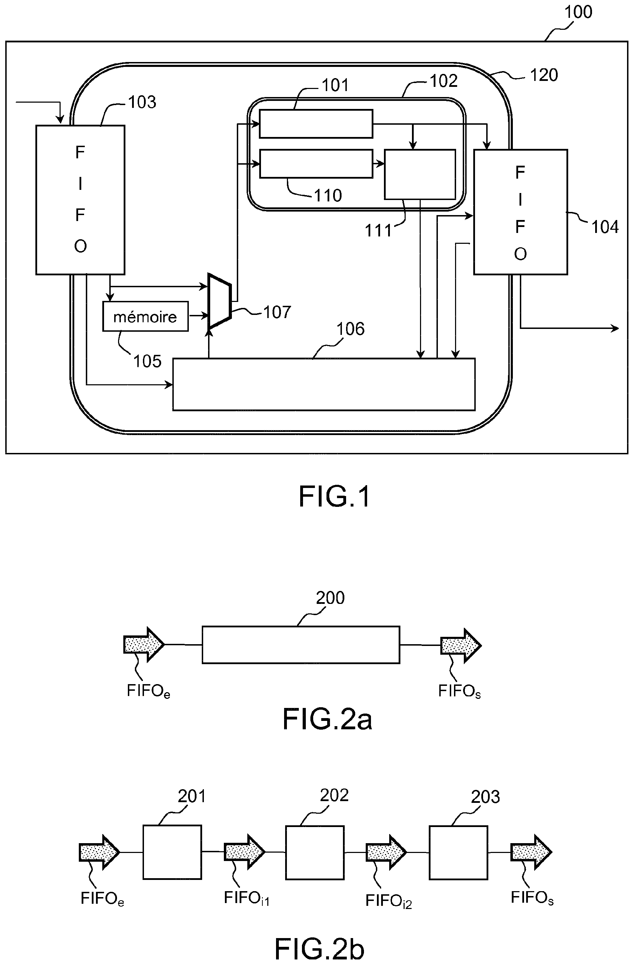

La figure 1 représente une partie 100 d'un circuit intégré numérique comprenant un bloc logique fonctionnel 101 exécutant une fonction sensible aux erreurs transitoires, que l'invention vise à protéger. Le bloc logique fonctionnel 101 peut correspondre à une fonction logique élémentaire ou à un ensemble de fonctions logiques interconnectées pour réaliser un traitement particulier. De ce point de vue, le bloc logique fonctionnel 101 est modulaire et correspond à un regroupement d'une ou plusieurs portes logiques du circuit à protéger. Le mécanisme de protection aux erreurs fourni par l'invention est construit autour du bloc logique fonctionnel 101 à protéger. Ainsi, sur un même circuit intégré, plusieurs blocs logiques fonctionnels peuvent être protégés par l'ajout d'un mécanisme de protection associé à chacun des blocs. Une contrainte du bloc logique fonctionnel 101 est qu'il doit avoir une latence constante, autrement dit, le nombre d'échantillons en entrée nécessaires pour générer un résultat doit être constant quelles que soit les données en entrée. Le bloc logique fonctionnel 101 est intégré dans l'unité logique 102 de détection d'erreurs transitoires.

Le mécanisme de protection selon l'invention comprend principalement une unité logique 102 de détection d'erreurs transitoires, une mémoire FIFO d'entrée 103 pour recevoir des données sous forme d'échantillons et alimenter l'entrée de l'unité logique 102 de détection d'erreurs transitoires incluant le bloc logique fonctionnel 101, une mémoire FIFO de sortie 104 pour recevoir les échantillons produits par le bloc logique fonctionnel 101 en sortie, une mémoire tampon 105 et une unité logique de contrôle 106. La mémoire FIFO d'entrée 103 et la mémoire FIFO de sortie 104 sont remplies au fil de l'eau selon un principe connu dit du premier entré, premier sorti ou First In First Out en anglais. La mémoire FIFO d'entrée 103 est alimentée par les traitements fonctionnels situés en amont. La mémoire FIFO de sortie 104 fourni des données aux traitements fonctionnels situés en aval. La mémoire tampon 105 est remplie au fil de l'eau avec les L derniers échantillons lus dans la mémoire FIFO d'entrée 103, L étant la taille de la mémoire tampon 105.

L'unité logique de contrôle 106 est apte à commander les différents éléments du mécanisme de protection. En particulier, elle commande l'activité de l'unité logique 102 de détection d'erreurs, l'activité du bloc logique fonctionnel 101, l'accès à la lecture dans la mémoire FIFO d'entrée 103 et l'accès à l'écriture dans la mémoire FIFO de sortie 104.

Le principe de protection du bloc logique fonctionnel 101 est le suivant. L'unité logique 102 de détection d'erreurs permet, à chaque fois qu'un résultat est produit par le bloc logique fonctionnel 101, de détecter qu'une erreur transitoire a perturbé l'exécution du traitement. Plusieurs solutions connues sont possibles pour mettre en oeuvre un mécanisme de détection d'erreurs.

Une première solution consiste à ajouter une seconde instance 110 du bloc logique fonctionnel 101 qui est exécutée en parallèle avec les mêmes données d'entrée et est donc censée produire le même résultat. Un comparateur 111 permet de détecter une différence entre les résultats produits par les deux instances 101,110 du bloc logique fonctionnel, cette différence traduisant une erreur transitoire dans l'une des deux instances.

Cette première solution peut être rendue moins coûteuse en nombre d'opérations à réaliser et en portes logiques en implémentant une projection modulo de la fonction à redonder. Autrement dit, la seconde instance 110 du bloc logique fonctionnel reproduit les traitements de la première instance 101 mais en projetant les données les opérandes et les résultats intermédiaires, en tout point du bloc, à une valeur modulo N, où N est un entier strictement positif. Le comparateur 111 réalise ensuite une comparaison entre le résultat de la première instance 101 du bloc logique fonctionnel, projeté à sa valeur modulo N et le résultat produit par la seconde instance 110. Cette variante d'implémentation n'est cependant compatible que des fonctions linéaires, et ne permet pas de détecter toutes les erreurs.

D'autres solutions de détection d'erreurs sont possibles, telles que l'utilisation d'un codage détecteur d'erreurs appliqué aux données avant d'être traitées par le bloc logique fonctionnel 101. L'unité logique de détection d'erreurs 102 comprend alors un module de détection d'erreurs basé sur le décodage du code détecteur d'erreurs.

Sans sortir du cadre de l'invention, tout mécanisme permettant de détecter une erreur dans le résultat produit par le bloc logique fonctionnel 101, par redondance spatiale, par ajout de redondance aux données à traiter ou par d'autres moyens, est envisageable.

L'unité logique de détection d'erreurs 102 est reliée à l'unité logique de contrôle 106 afin de l'informer de la détection d'une erreur. Lorsque cet évènement se produit, l'unité logique de contrôle 106 interdit provisoirement l'écriture dans la mémoire FIFO de sortie 104, interdit provisoirement la lecture dans la mémoire FIFO d'entrée 103, réinitialise l'unité logique de détection d'erreurs 102 et le bloc logique fonctionnel 101, puis commande l'accès en lecture de la mémoire tampon 105 pour fournir une séquence d'échantillons, antérieurs à l'erreur, en entrée de toutes les instances101,110 du bloc logique fonctionnel afin de restaurer l'état de ce bloc. Le basculement de l'entrée du bloc logique fonctionnel 101 de la mémoire FIFO d'entrée 103 vers la mémoire tampon 105 peut être réalisé au moyen d'un multiplexeur 107 ou tout autre moyen équivalent. Le bloc logique fonctionnel 101 exécute ensuite son traitement sur les données lues dans la mémoire tampon qui sont identiques aux données déjà traitées antérieurement et qui ont conduit à un résultat erroné du fait d'une erreur transitoire. Sur commande de l'unité logique de contrôle 106, la mémoire tampon 105 cesse d'enregistrer les échantillons lus dans la mémoire FIFO d'entrée 103 tant que l'état interne du bloc fonctionnel 101 n'a pas été complètement restauré.

En fonctionnement nominal, c'est-à-dire lorsqu'aucune erreur n'est détectée en sortie du bloc logique fonctionnel 101, les échantillons sont lus directement dans la mémoire FIFO d'entrée 103. En parallèle, les L derniers échantillons lus dans la mémoire FIFO d'entrée 103 sont à chaque instant stockés dans la mémoire tampon 105 qui est reliée à la mémoire FIFO d'entrée 103. La taille L de la mémoire tampon 105 est directement liée à la latence du bloc logique fonctionnel 101. Elle est au moins égale à cette latence, exprimée en nombre d'échantillons. En effet, le rôle de la mémoire tampon 105 est de conserver, à chaque instant, les L derniers échantillons lus dans la mémoire FIFO d'entrée 103 pour permettre une restauration de l'état interne du bloc logique fonctionnel 101 et un re-jeu de la fonction exécutée par le bloc logique fonctionnel 101 sur ces L derniers échantillons si une erreur transitoire se produit. Le terme « re-jeu » est employé pour désigner une nouvelle exécution du traitement opéré par un bloc logique fonctionnel sur les mêmes échantillons que lors de la séquence précédente.

L'invention concerne le cas général des circuits intégrés numériques, pour lesquels on peut difficilement sauvegarder et restaurer l'état interne, contrairement au cas des circuits numériques de type micro-processeur, microcontrôleur, processeur multi-coeur, processeur à multiples coeurs, processeur graphique GPU ou processeur de traitement de signal DSP dont l'état interne est entièrement défini par un jeu limité de registres accessibles en écriture et en lecture à travers un bus.

Au lieu de sauvegarder l'état interne, on sauvegarde la séquence antérieure des échantillons d'entrée. Au lieu de restaurer un état interne préalablement archivé, on restaure indirectement l'état interne en rejouant le traitement d'une séquence antérieure, à concurrence de la latence de la fonction.

Comme explicité au début de ce document, une erreur transitoire est réversible et il suffit généralement de réinitialiser le bloc logique fonctionnel 101 pour supprimer l'effet de cette erreur. Si une nouvelle erreur est malgré tout détectée par l'unité logique de détection d'erreurs 102, le mécanisme de re-jeu est itéré autant de fois que nécessaire jusqu'à ce que le résultat produit par le bloc logique fonctionnel 101 soit validé. Ainsi, la mémoire tampon permet de remonter dans le temps en sauvegardant les données nécessaires pour restaurer l'état interne du bloc logique fonctionnel 101 et rejouer ou exécuter à nouveau la fonction impactée par l'erreur après sa réinitialisation. La taille de la mémoire tampon est donc au moins égale à la latence du bloc logique fonctionnel 101.

Un objectif de l'invention est de protéger le bloc logique fonctionnel 101 contre les erreurs transitoires tout en garantissant une continuité de service du circuit intégré. Autrement dit, le mécanisme de re-jeu activé suite à la détection d'une erreur ne doit pas perturber le fonctionnement global du circuit et en particulier ne doit pas modifier sa vitesse d'exécution telle qu'observable depuis les interfaces d'entrée et de sortie.

Pour cela, le design du circuit est constitué de deux domaines d'horloge distincts. La partie protégée 120 du circuit intégré, comprenant l'unité logique de détection d'erreurs 102, le bloc logique fonctionnel 101, l'unité logique de contrôle 106, la mémoire tampon 105 et le multiplexeur 107, est cadencée à un rythme plus rapide que le rythme moyen nominal de fonctionnement des interfaces d'entrée et de sortie du bloc logique fonctionnel 101. La mémoire FIFO d'entrée 103 et la mémoire FIFO de sortie 104 sont des mémoires synchrones à double ports et double horloges aussi désignés par l'acronyme anglais « dual-clock FIFO » qui sont interfacées entre les deux domaines d'horloge. Autrement dit, chaque mémoire FIFO à un port d'entrée associé à une première horloge et un port de sortie associé à une seconde horloge. Cela permet de découpler le rythme des données entre le domaine d'horloge externe et le domaine d'horloge interne accéléré.

L'accélération du rythme de fonctionnement du système de protection permet de compenser le retard induit par les traitements supplémentaires nécessaires à la correction d'erreur afin de conserver un fonctionnement sans erreur au rythme moyen nominal tel qu'observable aux interfaces du bloc logique 120 protégé par l'invention. En outre, le rythme accéléré du système de protection est rendu irrégulier, afin de pouvoir disposer d'une marge temporelle pour effectuer la réinitialisation de l'unité logique 102 de détection d'erreurs incluant le bloc logique fonctionnel 101, pour rejouer le traitement mis en oeuvre par ce bloc, et pour rattraper le retard sur le traitement des données en cas de détection d'erreur.

Le séquencement du système de protection est assuré par l'unité logique de contrôle 106 qui commande :

- la source des données d'entrée de l'unité logique de détection d'erreurs 102 incluant le bloc logique fonctionnel 101, à savoir la mémoire FIFO d'entrée 103 ou la mémoire tampon 105,
- la réinitialisation de l'unité logique de détection d'erreurs 102 incluant le bloc logique fonctionnel 101,
- l'activité de l'unité logique de détection d'erreurs 102 incluant le bloc logique fonctionnel 101,
- la transmission des données de sortie du bloc logique fonctionnel 101 vers la mémoire FIFO de sortie 104.

Le séquencement est irrégulier et est conditionné à la disponibilité des données dans la mémoire FIFO d'entrée 103, à la place disponible dans la mémoire FIFO de sortie 104, à la détection d'une erreur par l'unité logique de détection d'erreurs 102 et à la latence du bloc logique fonctionnel 101.

Par exemple, lorsque la mémoire FIFO de sortie 104 est pleine, l'unité logique de contrôle 106 bloque l'activité de l'unité logique de détection d'erreurs 102 incluant le bloc logique fonctionnel 101 ce qui empêche de nouveaux accès en écriture dans la mémoire FIFO de sortie 104 jusqu'à ce que de la place se libère. De même, si la mémoire FIFO d'entrée 103 est vide, l'unité logique de contrôle 106 bloque l'activité de l'unité logique de détection d'erreurs 102 incluant le bloc logique fonctionnel 101 ce qui empêche de nouveaux accès en lecture dans la mémoire FIFO d'entrée 103 tant que de nouveaux échantillons ne sont pas disponibles dans cette mémoire. Ainsi, la mémoire FIFO de sortie 104 est apte à communiquer à l'unité logique de contrôle 106 son état de remplissage. De même pour la mémoire FIFO 103 d'entrée.

Le respect de la continuité de service et de la fréquence moyenne d'exécution des traitements tels qu'observables à l'extérieur du système de protection 120 dépend directement du dimensionnement de la mémoire FIFO d'entrée 103 et de la mémoire FIFO de sortie 104. Ainsi, ce dimensionnement dépend notamment de la latence du bloc logique fonctionnel 101, du nombre maximum d'erreurs à tolérer en rafale, et de l'accélération de la fréquence de traitement au sein du système de protection 120.

L'accélération irrégulière du rythme d'exécution au sein du système de protection 120 peut être réalisée au moyen d'une part d'une horloge régulière à une fréquence accélérée, et d'autre part à l'aide d'un signal d'activation (en anglais : clock enable) conditionnant la prise en compte de l'horloge par les bascules de la logique séquentielle, ce signal d'activation étant contrôlé par l'unité logique de contrôle 106. Ceci permet des implantations synchrones sur horloge continue, avec la possibilité de régler dynamiquement le rythme de séquencement par le signal d'activation, selon le besoin. L'accélération irrégulière peut comprendre des cycles éventuellement inactifs. Pour cela, le signal d'activation a la capacité de geler la logique séquentielle pour forcer des cycles inactifs.

L'invention peut être appliquée globalement à l'ensemble d'une chaine de traitements 200 ou à plusieurs blocs 201,202,203 d'une chaine de traitement comme cela est illustré sur les figures 2a et 2b. Chaque bloc de la chaine de traitement est réalisé avec une latence fixe et constante qui dépend de la complexité des traitements dans chaque bloc.

Dans le cas de la figure 2a, le circuit protégé par l'invention comporte une seule mémoire FIFO d'entrée $FIFO_e$ et une seule mémoire FIFO de sortie $FIFO_s$ qui servent pour interfacer le domaine d'horloge interne à la chaine de traitement 200 protégée par l'invention et le domaine d'horloge externe correspondant aux entrées et sorties de la chaine de traitement 200.

Dans le cas de la figure 2b, chaque bloc protégé par l'invention est interfacé avec un bloc amont via une mémoire FIFO d'entrée et avec un bloc aval via une mémoire FIFO de sortie. Ainsi, sur l'exemple de la figure 2b comprenant trois blocs 201,202,203, le circuit comporte une mémoire FIFO d'entrée $FIFO_e$ connectée en entrée du premier bloc 201, une mémoire FIFO de sortie $FIFO_s$ connectée en sortie du dernier bloc 203 et deux mémoires FIFO

intermédiaires $FIFO_{i1}$, $FIFO_{i2}$ qui servent à la fois de mémoire FIFO d'entrée et de mémoire FIFO de sortie. La mémoire $FIFO_{i1}$ sert de mémoire d'entrée au bloc 202 et de mémoire de sortie au bloc 201. La mémoire $FIFO_{i2}$ sert de mémoire d'entrée au bloc 203 et de mémoire de sortie au bloc 202.

Comme expliqué précédemment, le domaine d'horloge interne à un bloc de traitement 200,201,202,203 protégé par l'invention est accéléré par rapport au besoin nominal. Pour assurer une continuité de service sur l'ensemble du circuit, le niveau de remplissage des mémoires FIFO d'entrée et de sortie est contrôlé par l'unité logique de contrôle de chaque bloc.

On décrit à présent la logique de contrôle du niveau de remplissage d'une mémoire FIFO d'interface d'entrée $FIFO_e$ ou de sortie $FIFO_s$.

Idéalement, pour pouvoir effectuer un re-jeu d'un traitement fonctionnel suite à la détection d'une erreur dans ce traitement, la mémoire FIFO de sortie en interface externe doit être presque pleine, afin d'optimiser la capacité à fournir des données de sortie valides lors du re-jeu pendant lequel l'écriture dans la mémoire FIFO de sortie est suspendue. De même, la mémoire FIFO d'entrée en interface externe doit être presque vide, afin d'optimiser la capacité à stocker des données d'entrée pendant un re-jeu pendant lequel la lecture dans la mémoire FIFO d'entrée est suspendue. On peut donc optimiser le dimensionnement des deux mémoires FIFO en réglant le fonctionnement nominal sur ces niveaux de remplissage cibles. Autrement dit, en dehors des phases de récupération d'erreur, le niveau de remplissage d'une mémoire FIFO d'entrée est contrôlé pour être presque vide et le niveau de remplissage d'une mémoire FIFO de sortie est contrôlé pour être presque plein. L'expression « presque vide » doit être comprise comme signifiant que la mémoire presque vide contient un nombre minimum de données ou d'échantillons, typiquement de l'ordre de la dizaine d'échantillons. De même, l'expression « presque plein » doit être comprise comme signifiant que la mémoire presque pleine est quasiment entièrement remplie avec un espace mémoire libre correspondant à un ordre de grandeur d'une dizaine de données ou échantillons. Ces considérations ne s'appliquent bien entendu pas aux mémoires FIFO intermédiaires qui présentent la double fonction de mémoire d'entrée et de sortie $FIFO_{i1}$, $FIFO_{i2}$.

Une mémoire FIFO devenant pleine provoque la suspension du traitement en amont. Une mémoire FIFO devenant vide provoque la suspension du traitement en aval.

Dans le cas des mémoires $FIFO_{i1}$, $FIFO_{i2}$ intermédiaires qui interfacent deux blocs de traitement protégés par l'invention, il faut concilier les objectifs de remplissage pour les besoins à la fois en entrée et en sortie. Dans ce cas, le niveau de remplissage cible optimal est donc un niveau médian de 50%. En sortie d'une chaine de traitement, on pourrait observer une rupture de séquence des résultats (ce qui correspond aussi à des résultats erronés) en particulier si :

- la mémoire FIFO d'entrée d'un bloc est pleine alors que de nouvelles écritures sont commandées,
- la mémoire FIFO d'entrée d'un bloc est vide alors que de nouvelles lectures sont commandées,
- la mémoire FIFO de sortie d'un bloc est vide alors que de nouvelles lectures sont commandées,
- la mémoire FIFO de sortie d'un bloc est pleine alors que de nouvelles écritures sont commandées.

Il faut donc gérer dynamiquement le niveau de remplissage des différentes mémoires FIFO d'interface (entre blocs et avec l'extérieur des blocs) pour éviter ces ruptures de séquence en sortie. Cette gestion dynamique est effectuée par l'unité logique de contrôle 106 de chaque bloc protégé par l'invention. En pratique, l'activité de chaque bloc est conditionnée par le niveau de remplissage de sa mémoire FIFO d'entrée et de sa mémoire FIFO de sortie. Cette activité influe sur l'activité des autres blocs de proche en proche, les mémoires FIFO servant d'interface. De part et d'autre de la chaîne de traitement, les données d'entrée arrivent à un rythme donné R et les données de sortie doivent être générées à ce même rythme R dans le cas d'un traitement mono-cadence.

Le rythme R est un rythme moyen de fonctionnement d'une chaine de traitement mono-cadence. Il correspond au débit des échantillons d'entrée ou de sortie. Ce rythme moyen correspond aussi à une fréquence d'horloge moyenne F.

La logique d'un bloc fonctionnel 120 protégé par l'invention est cadencée à un rythme Ra sur une horloge de fréquence Fa accélérée relativement à la fréquence d'horloge moyenne F externe au bloc 120 : $Fa = \gamma * F$ et $Ra = \gamma * R$ (avec $\gamma > 1$). La fréquence d'horloge moyenne F externe au bloc 120 correspond à la fréquence moyenne d'écriture dans la mémoire FIFO d'entrée du bloc 120. Le taux $\gamma$ d'accélération de la fréquence peut être choisi très proche de 1, typiquement $\gamma=1.05$ ou $\gamma=1.1$ pour limiter l'écart entre le rythme moyen fonctionnel R et le rythme moyen accéléré Ra de séquencement de la logique du bloc fonctionnel 120. Ceci permet de limiter l'impact du dispositif de protection sur la vitesse de traitement. Le bloc fonctionnel 120 fonctionne sur une horloge à la fréquence Fa et de manière conditionnelle avec un signal d'activation commandant l'activité du bloc selon un fonctionnement irrégulier comme expliqué précédemment.

Pour un bloc de traitement donné 120, on évite le remplissage excessif de la mémoire FIFO d'entrée en augmentant l'activité moyenne du bloc, ce qui induit une augmentation du rythme moyen de lecture de cette mémoire FIFO d'entrée. L'activité moyenne est modulée (diminuée ou augmentée) dynamiquement à travers le pilotage du signal d'activation spécifique au bloc de traitement. Le signal d'activation est contrôlé par l'unité logique de contrôle 106. Ce signal d'activation est typiquement généré par un séquenceur, sur l'horloge à la fréquence Fa de fonctionnement du bloc protégé 120. Si on note $\gamma_i$ le taux d'activité (variable avec $0 \leq \gamma_i \leq 1$) du signal d'activation alors le rythme de traitement du bloc 120 est égal à $\gamma_i * Ra = \gamma_i * \gamma * R$. Le taux d'activité $\gamma_i$ varie dynamiquement et indépendamment pour chaque bloc de traitement protégé.

Alors que l'accélération $\gamma$ et le rythme moyen R sont fixes, le taux d'activité $\gamma_i$ du signal d'activation est ajustable dynamiquement par une logique de contrôle séquencée sur l'horloge accélérée (à la fréquence Fa). La génération du signal d'activation permet donc d'ajuster dynamiquement le rythme de traitement du bloc 120. Lorsque la mémoire FIFO d'entrée 103 du bloc 120 présente un niveau de remplissage trop élevé, le rythme de traitement du bloc 120 est augmenté afin de lire la mémoire FIFO d'entrée 103 plus rapidement qu'elle ne se remplit. Dès que son niveau de remplissage descend sous un seuil donné, le rythme de traitement du bloc 120 est ralenti, toujours à travers la commande du signal d'activation. Le contrôle du niveau de remplissage des mémoires FIFO 103,104 est aussi effectué par l'unité logique de contrôle 106.

L'augmentation ponctuelle du rythme de traitement du bloc 120 conduit à une augmentation du niveau de remplissage de sa mémoire FIFO de sortie 104 (si un bloc situé en aval du bloc 120 n'est pas lui-même accéléré) et à une diminution du niveau de remplissage de sa mémoire FIFO d'entrée 103 (si un bloc situé en amont du bloc 120 n'est pas lui-même accéléré). Cela permet de transformer un excédent de données de la mémoire FIFO d'entrée 103 en un excédent de données dans la mémoire FIFO de sortie 104.

La diminution ponctuelle du rythme de traitement du bloc 120 conduit à une diminution du niveau de remplissage de sa mémoire FIFO de sortie 104 (si un bloc situé en aval du bloc 120 n'est pas lui-même ralenti) et à une augmentation du niveau de sa mémoire FIFO d'entrée 103 (si un bloc situé en en amont du bloc 120 n'est pas lui-même ralenti). Cela permet de transformer indirectement un excédent de données de la mémoire FIFO de sortie 104 en un excédent de données dans la mémoire FIFO d'entrée 103. Ainsi l'unité logique de contrôle 106 commande dynamiquement l'activité de chaque bloc de la chaîne de traitement pour ajuster les niveaux de remplissage des mémoires FIFO, de l'amont vers l'aval, ou de l'aval vers l'amont.

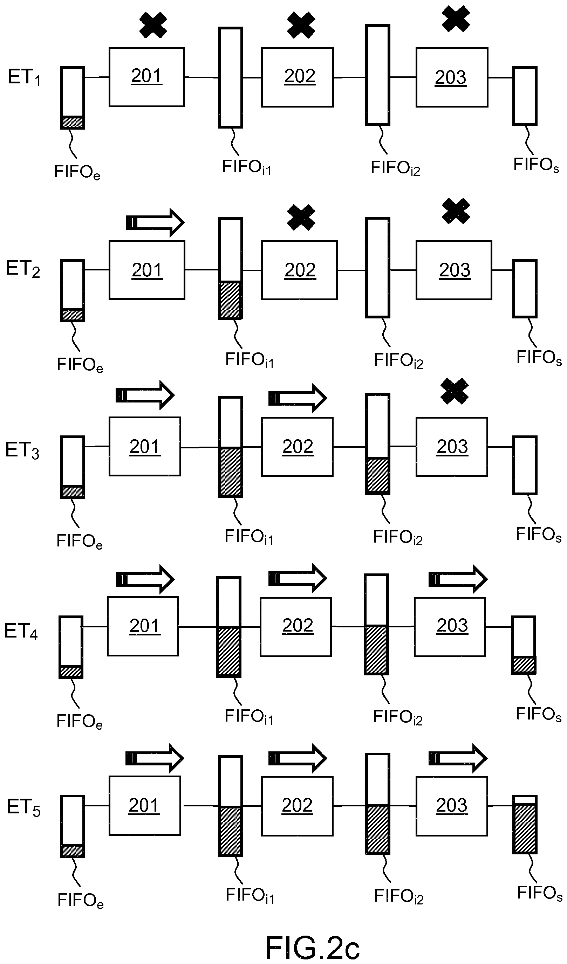

Afin d'être opérationnel, le mécanisme de protection apporté par l'invention doit être initialisé, en particulier pour remplir les mémoires FIFO intermédiaires $FIFO_{i1}$, $FIFO_{i2}$ et la mémoire FIFO de sortie $FIFO_s$ avec les niveaux cible de remplissage, respectivement à moitié plein et presque plein comme décrit précédemment. Cette opération d'initialisation est, par exemple, assurée par une séquence de démarrage tel qu'illustré sur la figure 2c.

La figure 2c schématise, pour l'exemple de dispositif décrit à la figure 2b, le remplissage progressif des mémoires FIFO lors de cinq étapes consécutives ET1,ET2,ET3,ET4,ET5. A l'issue de la première étape ET1, la mémoire FIFO d'entrée $FIFO_e$ est remplie à son niveau optimal (quasi vide). A l'issue de la deuxième étape ET2, la première mémoire FIFO intermédiaire $FIFO_{i1}$ est remplie à son niveau optimal (50%). A l'issue de la troisième étape ET3, la deuxième mémoire FIFO intermédiaire $FIFO_{i2}$ est remplie à son niveau optimal (50%). Lors de la quatrième étape ET4, la mémoire FIFO de sortie $FIFO_s$ est en cours de remplissage. A l'issue de la quatrième étape ET4, la mémoire FIFO de sortie $FIFO_s$ est remplie à son niveau optimal (quasi pleine). ET5 représente l'état final d'initialisation où toutes les mémoires FIFO sont remplies à leurs niveaux cibles.

A la fin de la procédure d'initialisation comprenant les étapes de remplissage successives décrites à la figure 2c, toutes les mémoires FIFO du circuit (protégé par l'invention) sont remplies à leur niveau optimal permettant alors de mettre en oeuvre le mécanisme de protection selon l'invention, en conservant une continuité de service.

Plus précisément, le mécanisme de protection selon l'invention peut être activé pour chacun des blocs logiques fonctionnels 201,202,203, dès que leurs mémoires FIFO de sortie respectives sont remplies à leur niveau de remplissage optimum.

Autrement dit, pour le bloc logique fonctionnel 201 alimenté par une mémoire FIFO d'entrée $FIFO_e$, la séquence d'initialisation se termine et le mécanisme de protection peut être activé lorsque sa mémoire FIFO de sortie $FIFO_{i1}$ a atteint son niveau de remplissage optimal. L'activité au démarrage du bloc 201 est conditionnée au remplissage de la mémoire FIFO d'entrée $FIFO_e$ à son niveau de remplissage optimal.

Pour le bloc logique fonctionnel 202, alimentée par une mémoire FIFO intermédiaire $FIFO_{i1}$, la séquence d'initialisation se termine et le mécanisme de protection peut être activé lorsque sa mémoire FIFO de sortie $FIFO_{i2}$ a atteint son niveau de remplissage optimum. L'activité au démarrage du bloc 202 est conditionnée au remplissage de sa mémoire FIFO d'entrée $FIFO_{i1}$ à son niveau de remplissage optimal.

Dans le cas d'un unique bloc protégé selon l'invention (exemple de la figure 2a), son activité au démarrage est conditionnée au remplissage de la mémoire FIFO d'entrée $FIFO_e$ à son niveau de remplissage optimal.

Lors de cette phase d'initialisation ou de démarrage, pour chaque bloc logique fonctionnel protégé 201,202,203, l'unité logique de contrôle 106 commande l'activité du bloc par le signal d'activation du bloc, compte tenu des niveaux de remplissage de la mémoire FIFO en amont et de la mémoire FIFO en aval.

En régime établi, après la séquence d'initialisation décrite à la figure 2c et en dehors des séquences de correction d'erreur, chaque bloc logique fonctionnel protégé selon l'invention gère le niveau de remplissage de sa mémoire FIFO en aval (en sortie du bloc) pour maintenir le niveau de remplissage cible. Plus précisément, l'unité logique de contrôle 106 de chaque bloc surveille et contrôle ce niveau de remplissage à l'aide du signal d'activation permettant de modifier le rythme d'activité au sein du bloc.

Pour le cas d'un bloc 201,202 connecté à une mémoire FIFO intermédiaire $FIFO_{i1}$, $FIFO_{i2}$ en aval, le niveau de remplissage cible est de 50%. Lorsque le niveau de remplissage de cette mémoire dépasse un seuil haut $S_h=50\%+\Delta$, où $\Delta$ est un paramètre de l'invention, l'unité logique de contrôle 106 suspend l'activité du bloc via le signal d'activation. Puis, lorsque le niveau de remplissage de cette mémoire descend en dessous d'un seuil médian $S_m=50\%$, l'unité logique de contrôle 106 relance l'activité du bloc au rythme nominal R.

Lorsque le niveau de remplissage de la mémoire descend sous un seuil bas $S_b=50\%-\Delta$, l'unité logique de contrôle 106 accélère l'activité du bloc au rythme Ra avec le signal d'activation. Puis, lorsque le niveau de remplissage dépasse à nouveau le seuil médian $S_m=50\%$, l'unité logique de contrôle 106 ralenti l'activité du bloc pour revenir au rythme nominal R.

En résumé, pour gérer dynamiquement le niveau de remplissage d'une mémoire FIFO intermédiaire située en aval d'un bloc protégé par l'invention, l'unité logique de contrôle 106 du bloc commande l'activité du bloc par le signal d'activation, compte tenu du niveau de remplissage de la mémoire FIFO en aval relativement à trois seuils : $S_b=50\%-\Delta$, $S_m=50\%$ et $S_h=50\%+\Delta$. $\Delta$ est un paramètre de l'invention typiquement de l'ordre du pourcentage d'occupation de la mémoire correspondant à une dizaine d'échantillons.

Dans le cas d'un bloc 203 connecté à une mémoire FIFO de sortie $FIFO_s$ en aval, le principe décrit ci-dessus est similaire mais les trois seuils sont définis de la manière suivante : $S_b=100\%-2\Delta$, $S_m=100\%-\Delta$ et $S_h=100\%-\delta$. $\delta$ est un autre paramètre de l'invention typiquement de l'ordre du pourcentage d'occupation de la mémoire correspondant à un ou deux échantillons.

Ainsi, le contrôle du niveau de remplissage de la mémoire FIFO de sortie permet de réguler ce niveau de remplissage à un niveau presque plein, en évitant la saturation de la mémoire FIFO.

Pour gérer dynamiquement le niveau de remplissage de la mémoire FIFOs de sortie, l'unité logique de contrôle 106 commande l'activité du dernier bloc 203 protégé, par le signal d'activation du bloc, compte tenu du niveau de remplissage de la mémoire FIFOs en aval relativement à trois seuils : Sb=100%-2$\Delta$, Sm=100%- $\Delta$ et Sh=100%-$\delta$.

On illustre à présent différents cas d'ajustement dynamique des niveaux de remplissage des mémoires FIFO pour l'exemple de la figure 2b.

Un premier exemple d'application concerne un scénario où une erreur est détectée dans le bloc fonctionnel 202. Selon la logique mise en oeuvre par l'invention, telle que décrite à la figure 1, un re-jeu du traitement du bloc fonctionnel 202 est effectué ce qui entraine un retard sur le traitement des données d'entrée par le bloc 202. En conséquence, la mémoire FIFO de sortie $FIFO_{i2}$ du bloc 202 est en déficit de données et présente un niveau de remplissage plus faible que celui requis. A l'inverse, la mémoire FIFO d'entrée $FIFO_{i1}$ du bloc 202 est en excédent de données et présente un niveau de remplissage plus élevé que celui requis. Pour régler dynamiquement ces niveaux de remplissage, l'unité logique de contrôle 106 du bloc 202 active un signal d'activation pour accélérer le rythme de traitement du bloc 202 afin de régulariser le retard de traitement des données d'entrée. Cette accélération a pour effet une diminution du niveau de remplissage de la mémoire FIFO d'entrée $FIFO_{i1}$ et une augmentation du niveau de remplissage de la mémoire FIFO de sortie $FIFO_{i2}$. Cette illustration d'application de l'invention à ce premier exemple montre que le mécanisme de correction par re-jeu avec accélération dynamique proposé par l'invention permet de restaurer l'état de bon fonctionnement de la chaîne de traitement, avec en particulier la restauration des niveaux de remplissage attendus pour les mémoires FIFO.

Un autre exemple d'application concerne un cas de déficit de données dans la mémoire FIFO de sortie $FIFO_s$ de l'ensemble de la chaine de traitement. Lorsque l'unité logique de contrôle du bloc 203 détecte que le niveau de remplissage de la mémoire $FIFO_s$ est trop faible, elle déclenche une accélération de la fréquence de traitement du bloc 203. Cette accélération a pour conséquence une diminution du niveau de remplissage de la mémoire FIFO d'entrée $FIFO_{i2}$ qui joue aussi le rôle de mémoire de sortie pour le bloc 202 situé en amont. Ainsi, par effet de cascade, le bloc 202 puis le bloc 201 accélère sa fréquence de traitement afin de réguler le niveau de remplissage des mémoires de sortie. Ces accélérations en chaine se traduisent in fine par un déficit de données dans la mémoire FIFO d'entrée $FIFO_e$ de la chaine de traitement qui est équivalent au déficit initial de la mémoire FIFO de sortie $FIFO_s$.

En commandant dynamiquement la fréquence de traitement de chaque bloc 201,202,203, on peut de la même façon reporter un excédent de données dans la mémoire FIFO de sortie $FIFO_s$ vers un excédent de données dans la mémoire FIFO d'entrée $FIFO_e$ en ralentissant le fonctionnement de chaque bloc.

De façon similaire, on peut reporter un excédent de données dans la mémoire FIFO d'entrée $FIFO_e$ vers un excédent de données dans la mémoire FIFO de sortie $FIFO_s$ en accélérant le fonctionnement de chaque bloc.

De façon similaire, on peut reporter un déficit de données dans la mémoire FIFO d'entrée $FIFO_e$ vers un déficit de données dans la mémoire FIFO de sortie $FIFO_s$ en ralentissant le fonctionnement de chaque bloc.

En pratique, les mémoires FIFO d'entrée et de sortie de la chaîne de traitement ne sont pas censées être en déficit ou en excédent de données, en dehors du régime transitoire correspondant au démarrage de la chaîne.

En général, la fonction en aval s'interface avec une mémoire FIFO, dont la lecture est conditionnée à la disponibilité de données. De même, la chaîne ne démarre que lorsque le niveau de remplissage de la mémoire FIFO d'entrée est satisfaisant. De fait, lors du fonctionnement nominal de la chaîne, toutes les mémoires FIFO ont un niveau de remplissage normal. Ainsi, les seuls cas de mémoires FIFO en déficit ou en excédent de données correspondent aux phases de correction par re-jeu suite à une détection d'erreur.

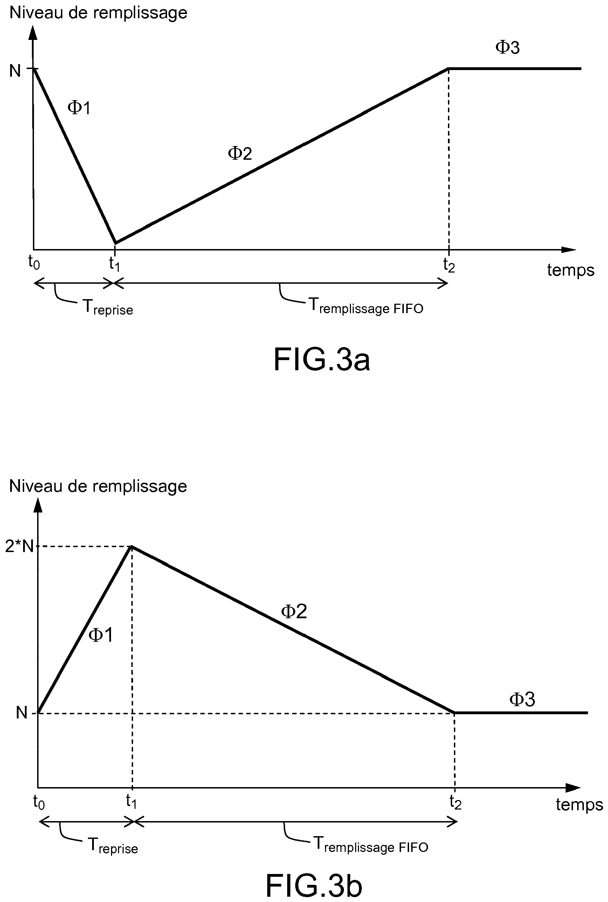

Les figures 3a et 3b illustrent respectivement sur deux diagrammes l'évolution du niveau de remplissage d'une mémoire FIFO de sortie 104 (figure 3a) et d'une mémoire FIFO d'entrée 103 (figure 3b) au cours du temps suite à une détection d'erreur.

A l'instant $t_0$, une erreur transitoire est détectée en sortie du bloc logique fonctionnel 101. Suite à la détection de cette erreur, pendant une première phase $\phi_1$, le traitement est interrompu dans ce bloc, l'accès en lecture de la mémoire FIFO d'entrée 103 est suspendu, et l'accès en écriture de la mémoire FIFO de sortie 104 est suspendu. La mémoire FIFO d'entrée 103 continue alors de se remplir tandis que la mémoire FIFO de sortie 104 continue de se vider à un rythme R, comme indiqué sur les figures 3a et 3b. L'unité logique de détection d'erreurs 102 incluant le bloc logique fonctionnel 101 est réinitialisée, l'état antérieur à l'erreur détectée est restauré indirectement à partir du traitement accéléré au rythme Ra des L données stockées dans la mémoire tampon 105.

La première phase $\phi_1$ se termine à un instant $t_1$ lorsque le traitement du bloc fonctionnel 101 est repris à partir du résultat qui avait été détecté en erreur, et avec un rythme accéléré $R_a > R$. Dans une deuxième phase $\phi_2$, le bloc fonctionnel 101 est alors à nouveau autorisé à lire les données dans la mémoire FIFO d'entrée 103. Les résultats du traitement exécuté par le bloc fonctionnel 101 sont écrits au rythme Ra dans la mémoire FIFO de sortie 104 plus rapidement qu'ils ne sont lus par un bloc situé en aval, donc la mémoire FIFO de sortie 104 se remplit à nouveau comme illustré sur la figure 3a.

La deuxième phase $\phi_2$ se termine à un instant $t_2$ lorsque le niveau de remplissage de la mémoire FIFO de sortie 104 a atteint un seuil prédéterminé considéré optimal. Dans une troisième phase $\phi_3$, le bloc logique fonctionnel 101 reprend alors un rythme de traitement nominal R. Les capacités de protection sont alors restaurées.

Si on note N le nombre de données présentes dans la mémoire FIFO de sortie 104 à l'instant $t_0$ et qui correspond au niveau de remplissage optimal, le temps nécessaire pour vider la mémoire FIFO de sortie 104 de ses N données pendant la première phase $\phi_1$ est égal à $T_{vidange} = N/F$.

Le temps nécessaire pour réinitialiser l'unité logique de détection d'erreurs 102 incluant le bloc fonctionnel logique 101, pour restaurer son état antérieur en traitant L échantillons antérieurs à l'erreur, pour reprendre le fil du traitement sur le résultat qui était en erreur et pour reprendre l'écriture des résultats dans la mémoire FIFO de sortie 104 pendant la deuxième phase $\phi_2$ est égal à $T_{reprise} = (L+\varepsilon)/F_a$, avec L la latence du bloc 101 exprimée en cycles, $\varepsilon$ une marge égale à quelques cycles, typiquement inférieure à 10 cycles, pour prendre en compte les asynchronismes éventuels et la synchronisation, $F_a = \gamma*F$ et $\gamma>1$, F étant exprimée en Hertz.

La condition qui garantit une reprise transparente pour les blocs en aval du bloc 120, autrement dit qui garantit que la détection d'erreurs est imperceptible en sortie de chaîne de traitement est : $T_{reprise} < T_{vidange}$. Si cette condition est respectée, la mémoire FIFO de sortie 104 n'est jamais complètement vidée. Cette condition revient donc à la condition suivante :

$$N > (L+\varepsilon)/\gamma.$$

Le raisonnement ci-dessus pour la mémoire FIFO de sortie 104 est valable pour toutes les mémoires $FIFO_i$, servant à la fois en entrée et en sortie. Pour le bloc considéré 101, la mémoire FIFO d'entrée 103 est normalement utilisée avec N données disponibles. Lors de la correction par re-jeu dans le bloc considéré 101, la mémoire FIFO d'entrée 103 est remplie avec N nouvelles données, sans être lue pendant la phase $\phi_1$. Ainsi, chaque mémoire FIFO doit donc pouvoir stocker $2*(N+\varepsilon)$ données. En pratique, on choisit une taille de mémoire FIFO supérieure à $2*(L+\varepsilon)$, pour chaque mémoire FIFO.

Dans le cas d'une mémoire FIFO d'entrée 103 ne servant pas de mémoire FIFO de sortie pour un bloc protégé selon l'invention, le besoin en capacité de la mémoire FIFO peut être réduit à $(L+\varepsilon)$ données, car le niveau de remplissage optimal pour une mémoire FIFO d'entrée est presque vide.

Le temps de restauration $T_{restauration}$ correspond à la durée pendant laquelle on traite une erreur et on restaure les capacités de correction, c'est-à-dire les niveaux de remplissage des mémoires FIFO. Il est égal à $T_{restauration} = T_{reprise} + T_{remplissage\ FIFO}$.

$T_{remplissage\ FIFO}$ désigne le temps nécessaire pour remplir la mémoire FIFO d'entrée (ou la mémoire FIFO de sortie) à son niveau de remplissage optimal.

Pendant la phase $\phi_2$, la mémoire FIFO de sortie 104 est lue à un rythme R par un bloc en aval, et elle est remplie à un rythme accéléré $R_a$ par le bloc courant 101. Globalement, son niveau de remplissage augmente au rythme $R(\gamma - 1)$. Donc, on en déduit que $T_{remplissage\ FIFO} = N/(F*(\gamma-1))$ et donc

$$T_{restauration} = (L + \varepsilon) / Fa + N / (F^* (\gamma-1)) = (L + \varepsilon) / (\gamma \, ^*F) + N / (F^* (\gamma-1)).$$

Le raisonnement développé ci-dessus pour le dimensionnement des mémoires FIFO et le temps de restauration des capacités de correction correspond au traitement pour une erreur sur un bloc de la chaîne de traitement. On peut étendre ce raisonnement au cas d'une succession d'erreurs au sein de la fonction protégée 101 (soit au niveau chaîne globale, soit au niveau bloc de traitement) pendant la phase $\phi_1$ en cours de re-jeu. Le besoin en dimensionnement des mémoires FIFOs est différent dans ce cas.

Pendant la phase $\phi_1$ d'un re-jeu, les données d'entrée pour le bloc 101, antérieures à la manifestation de l'erreur sont toujours disponibles et intègres dans la mémoire tampon 105, en aval de la mémoire FIFO d'entrée 103. Pendant cette phase $\phi_1$, la mémoire FIFO d'entrée 103 n'est plus lue, seules les données archivées dans la mémoire tampon 105 sont utilisées pour restaurer l'état antérieur de la fonction du bloc de traitement 101. L'occurrence d'une seconde erreur pendant cette phase conduit à relancer cette phase $\phi_1$ (réinitialisation / restauration de l'état antérieur). Ainsi, la durée de cette phase $\phi_1$ sera au plus doublée. Dans le cas général, la durée de la phase $\phi_1$ est inférieure ou égale à $p^*T_{reprise}$ dans le cas de p erreurs consécutivement espacées de moins de $T_{reprise}$. Il y a égalité lorsque la nouvelle erreur se produit en fin de phase $\phi_1$. Dans ce cas, toute nouvelle reprise est réalisée à partir des mêmes données d'entrée, archivées dans la mémoire tampon 105.

Mais les nouvelles données d'entrée continuent d'arriver au rythme R et remplissent la mémoire FIFO d'entrée 103 dont la lecture par le bloc 101 a été suspendue pendant une durée au plus égale à $p^*T_{reprise}$. La mémoire FIFO d'entrée 103 doit donc disposer de $p^*(L+\varepsilon)$ places libres en régime établi. De plus, l'étage en aval attend de nouvelles données de sortie. La mémoire FIFO de sortie 104 doit donc disposer de $p^*(L+\varepsilon)$ données en régime établi. Par conséquent, pour tolérer p erreurs consécutives séparées chacune de la précédente d'un intervalle de temps de durée inférieure à $T_{reprise}$ (nouvelles erreurs en phase $\phi_1$), les mémoires d'entrée FIFO$_e$ et de sortie FIFO$_s$ doivent être dimensionnées pour stocker $p^*(L+\varepsilon)$ données .Les mémoires FIFO$_i$ intermédiaires prenant à la fois le rôle de mémoire d'entrée et de mémoire sortie entre deux blocs protégés doivent être dimensionnées pour stocker $2\,p^*(L+\varepsilon)$ données.

Si une autre erreur survient pendant la phase $\phi_2$ de rejeu du bloc 101, les niveaux de remplissage des mémoires FIFO d'entrée et de sortie ne sont pas encore complètement restaurés. Une nouvelle erreur en début de phase $\phi_2$ conduit à relancer la séquence complète de correction (phase $\phi_1$ puis phase $\phi_2$), mais avec des marges amputées de N données sur les niveaux de remplissage des mémoires FIFO d'entrée et de sortie.

Ainsi, pour tolérer p erreurs consécutives séparées chacune de la précédente d'un intervalle de temps de durée supérieure à $T_{reprise}$ et inférieure à $T_{restauration}$ (nouvelles erreurs en phase $\phi_2$), les mémoires FIFO doivent aussi être dimensionnées pour stocker $2p^*(L+\varepsilon)$ données.

En intégrant la marge $\varepsilon$ dans une estimée $L_p$ de la latence de la fonction 101, la taille minimale des mémoires FIFO est égale à $p.\,L_p$ ou $2p.L_p$ selon que la mémoire FIFO n'a qu'une fonction de mémoire d'entrée ou de mémoire de sortie ou selon que la mémoire FIFO cumule les deux fonctions.

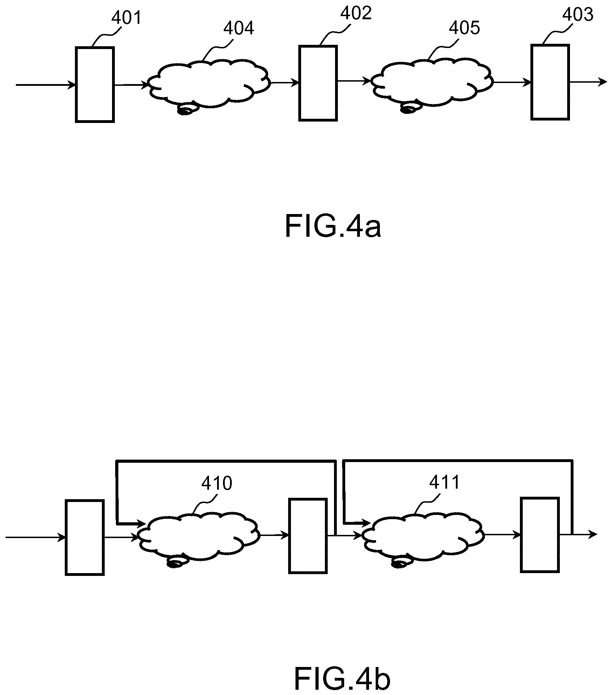

La description de l'invention qui précède concerne des blocs logiques fonctionnels 101 ayant une latence constante. Cela correspond à des circuits organisés en une cascade d'étages, dont les signaux intermédiaires et de sortie sont toujours propagés à un étage en aval, sans reboucler vers l'amont. Ces circuits ont une latence constante : les résultats en sortie ne dépendent que des N dernières données d'entrée. Un exemple typique de circuits à latence constante est donné par la famille des filtres RIF (FIR en anglais). Sur la figure 4a, on a représenté schématiquement un tel circuit dans lequel les rectangles 401,402,403 représentent des registres et les nuages 404,405 représentent la logique combinatoire.

Dans les circuits réalisant des fonctions avec des boucles de réaction (ou feedback loops en anglais) correspondant à des fonctions récursives, certains signaux intermédiaires ou de sortie sont réutilisés en amont, formant ainsi des boucles dites de réaction. Dans ce cas de figure, l'état du circuit dépend généralement de l'historique des signaux d'entrée à concurrence d'une profondeur infinie. Un exemple typique de circuit numérique récursif est donné par la famille des filtres RII (IIR en anglais). Sur la figure 4b, on a représenté schématiquement un circuit comprenant des traitements 410,411 avec boucles de réaction.

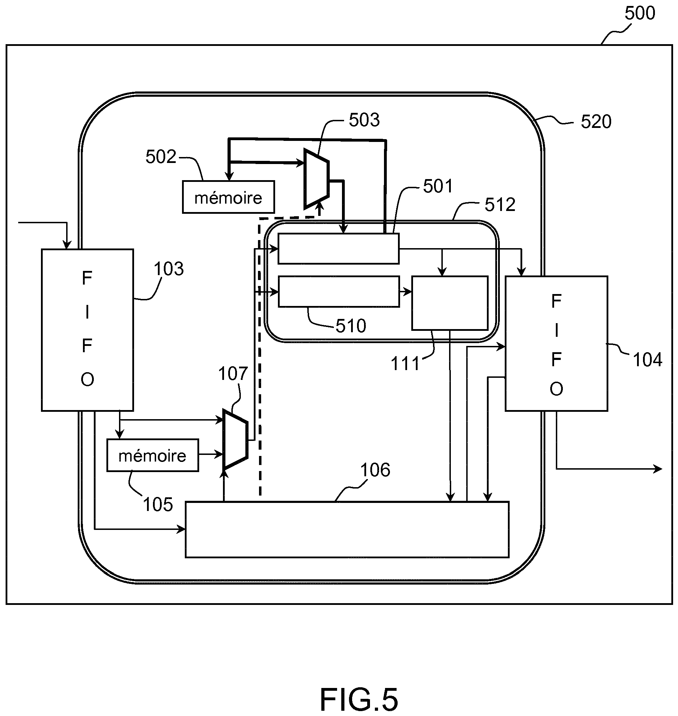

La figure 5 représente un schéma d'une variante de réalisation de l'invention qui concerne un circuit intégré numérique comprenant un bloc logique fonctionnel 501 réalisant une fonction récursive avec une boucle de réaction interne. Les éléments portant les mêmes références numériques sur les figures 1 et 5 sont identiques et sont gérés de la même manière que dans le cas correspondant à la protection de fonctions à latence constante.

Pour adapter l'invention à la protection des fonctions à boucles de réaction, le dispositif de correction par rejeu peut être adapté afin de pouvoir restaurer l'état interne de la fonction, à partir des données d'entrée antérieures et des valeurs archivées des différents signaux rebouclant vers l'amont au sein du bloc fonctionnel 501 à protéger.

Pour pouvoir protéger le bloc logique fonctionnel 501 comportant une ou plusieurs boucle(s) de réaction interne(s), ce bloc 501 est transformé afin d'implémenter la ou les boucle(s) de réaction en externe, c'est-à-dire à l'extérieur du bloc 501, et de rendre cette ou ces boucle(s) externe(s) ouvrable(s). L'ouverture d'une boucle externe est réalisée au moyen d'un multiplexeur 503 qui sélectionne les données de la seconde mémoire tampon 502.

Ainsi, le circuit 500 selon cette variante de réalisation de l'invention comprend, en plus des éléments déjà décrits à la figure 1, pour chaque signal de boucle à réaction, une seconde mémoire tampon 502 associée à un second multiplexeur 503 commandé par l'unité logique de contrôle 106. Le second multiplexeur 503 est commandé pour sélectionner alternativement soit les données en aval de la boucle de réaction interne du bloc logique fonctionnel 501, soit les données archivées dans la seconde mémoire tampon 502 qui correspondent aux données en aval de la boucle de réaction interne du bloc logique fonctionnel 501 à un instant antérieur à l'apparition d'une erreur. Le multiplexeur 503 est relié à une seconde entrée du bloc 501 pour injecter les données à reboucler en amont dans le bloc logique fonctionnel 501. En référence à la figure 5, le multiplexeur 503 sélectionne la sortie de la seconde mémoire tampon 502 pendant la première phase $\phi_1$ et la sortie spécifique du bloc 501 pendant la phase $\phi_2$ ou la phase $\phi_3$. Le multiplexeur 503 peut être remplacé par tout autre moyen équivalent permettant à l'unité logique de contrôle 106 de sélectionner les données à reboucler, issues soit de la seconde mémoire tampon 502, soit de la source aval de la boucle de réaction interne du bloc logique fonctionnel 501.

Le bloc logique fonctionnel 501 transformé dispose d'une sortie et d'une entrée spécifique pour respectivement extraire les données de la fonction à reboucler et pour injecter en amont les données extraites à reboucler. Ceci permet d'implanter la boucle de réaction à l'extérieur du circuit 501, afin d'archiver la séquence du signal de boucle à réaction et pour pouvoir injecter une séquence antérieure du signal de boucle à réaction.

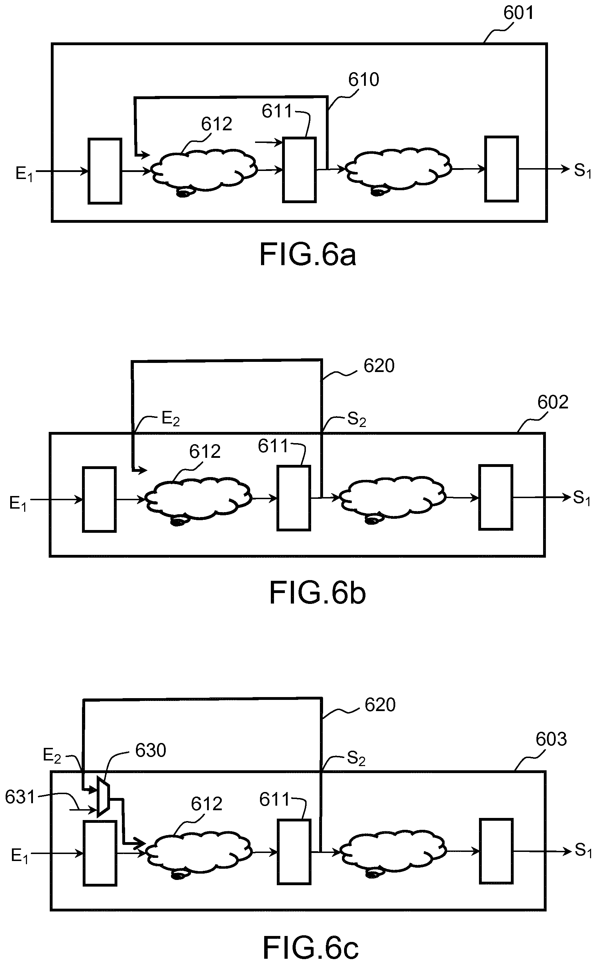

Ce principe est mieux illustré sur les figures 6a,6b,6c qui schématisent, sur trois schémas, la transformation d'un bloc logique fonctionnel 601 comprenant une boucle de réaction interne en un bloc logique fonctionnel 603 pour lequel la boucle de réaction est rendue externe et ouvrable.

La figure 6a représente un bloc logique fonctionnel 601 comprenant une boucle de réaction interne 610 qui a pour rôle de réinjecter les données en sortie du registre 611 vers l'entrée de la logique combinatoire 612. Le bloc logique fonctionnel 601 comprend une entrée $E_1$ et une sortie $S_1$.

La figure 6b représente une première transformation du bloc 601 vers un bloc transformé 602 dans lequel la boucle de réaction interne 610 est rendue externe 620. Pour cela, le bloc 602 est pourvu d'une seconde entrée $E_2$ et d'une seconde sortie $S_2$. La seconde sortie $S_2$ reçoit les données en sortie du registre 611. La seconde entrée $E_2$ permet d'injecter les données de la boucle de réaction externe 620 vers l'entrée de la logique combinatoire 612.

La figure 6c représente une seconde transformation du bloc 602 vers un bloc transformé 603 conforme à l'invention. Ce bloc 603 est modifié en ce qu'il comporte un multiplexeur 630 pour relier la seconde entrée $E_2$ soit à la boucle de réaction externe 620, auquel cas le fonctionnement du bloc 603 est en boucle fermée, soit à une autre source 631, auquel cas le fonctionnement du bloc 603 est en boucle ouverte.

Le principe décrit à la figure 6c est utilisé pour protéger le bloc fonctionnel logique selon l'invention.

En revenant à la figure 5, concernant les ressources de protection spécifiques pour les fonctions avec boucle de réaction, la seconde mémoire tampon 502 archive la séquence des N valeurs précédentes des données extraites de la boucle à réaction. L'accès en écriture et en lecture à cette seconde mémoire tampon 502 est géré de la même manière que la première mémoire tampon 105 en entrée du bloc fonctionnel protégé 501. La profondeur N correspond ici au nombre d'étages de registres en cascade dans la fonction réalisée par le bloc 501 en faisant abstraction des boucles (considérées ouvertes). La taille de cette mémoire tampon 502 peut être réduite selon la position du point d'injection en amont du signal de la boucle de réaction relativement à la sortie de la fonction. La taille de la mémoire tampon 502 est au plus égale au nombre d'étages de registres, lorsque la sortie est rebouclée sur l'étage d'entrée. Bien que sur la figure 5, on a représenté une seconde mémoire tampon 502 et un second multiplexeur 503, il faut en général autant d'ensembles de mémoires tampon 502 et de multiplexeurs 503 qu'il y a de boucles à réaction. Le dimensionnement de ces mémoires tampons pour archiver les données issues de la boucle de réaction supporte les cas des erreurs simples et en rafale. Ainsi, l'adaptation du circuit proposée à la figure 5 permet de prendre en compte les fonctions à boucle de réaction.

Le dimensionnement des mémoires FIFO en entrée, en sortie et intermédiaires est réalisé de la même manière que pour les fonctions à latence constante, en considérant que les boucles à réaction externes de la fonction sont ouvertes. Conceptuellement, l'ouverture des boucles permet de se ramener au cas d'une fonction à latence constante. En pratique, le fait d'implanter les boucles à réaction à l'extérieur du bloc logique fonctionnel 501, moyennant une entrée et une sortie spécifique pour la source et le point d'injection du signal de boucle de réaction, revient à transformer la fonction avec boucle de réaction en une fonction sans boucle à latence constante mais avec plusieurs sorties et plusieurs entrées.

L'invention présente de nombreux avantages vis-à-vis des solutions de l'art antérieur. Elle permet de réaliser une correction des erreurs transitoires impactant une ou plusieurs fonctions implémentées sur un circuit intégré numérique, de façon transparente pour les autres fonctions situées en amont ou en aval. Autrement dit, une continuité de service est assurée, sans impact sur le rythme d'exécution des traitements et le séquencement des échantillons au sein du circuit intégré numérique. Le mécanisme de protection aux erreurs apporté par l'invention ne perturbe pas significativement le fonctionnement nominal d'un circuit intégré, en particulier, ne ralenti pas significativement sa fréquence d'exécution et ne dégrade pas ses performances de traitement. L'invention permet de protéger toutes les ressources logiques d'un circuit intégré numérique, aussi bien la logique séquentielle que la logique combinatoire. Elle n'est pas soumise à des contraintes vis-à-vis de la technologie utilisée pour réaliser le circuit intégré. Elle présente une complexité logique et une dissipation réduites vis-à-vis des solutions usuelles, notamment celles basées sur une triplication modulaire et un vote majoritaire (TMR). Le mécanisme proposé permet de corriger les erreurs au plus tôt et ne se contente pas de les masquer. Même si une erreur transitoire affecte globalement l'unité logique de détection d'erreurs 102, l'unité logique de détection d'erreurs 102 signale éventuellement une fausse erreur (faux positif), qui entraine un re-jeu inutile du bloc logique fonctionnel 101 mais qui n'a pas de conséquence. Le dimensionnement des mémoires FIFO d'entrée et sortie du dispositif selon l'invention permet d'adapter la capacité de correction du dispositif en fonction d'un scénario pire cas envisagé. Par exemple, si on anticipe une rafale de p erreurs étalées sur un temps court, le dimensionnement des mémoires FIFO peut être effectué à partir du paramètre p et de la latence du bloc logique fonctionnel à protéger. L'invention permet de protéger un bloc logique fonctionnel 101 contre les erreurs transitoires. Par ailleurs, les mémoires FIFO d'entrée 103 et de sortie 104 ainsi que les mémoires tampons 105 et l'unité logique de contrôle 106 peuvent, par ailleurs, être également protégées par des moyens de protection connues, par exemple en utilisant des codes correcteurs d'erreurs ou une méthode par triplication modulaire et vote majoritaire TMR.

Bien que l'invention ait été décrite dans le cadre de traitements mono-cadence, c'est-à-dire pour lesquels le rythme à l'interface d'entrée du bloc 120 et le rythme en interface de sortie sont identiques, elle s'applique de façon identique à des traitements multi-cadence, c'est-à-dire pour lesquels les rythmes à l'interface d'entrée et de sortie sont différents.

## Revendications

1. Circuit intégré numérique comprenant un ensemble logique (120,520) comprenant un bloc logique fonctionnel (101,501), une unité logique (102,512) de détection d'erreurs transitoires impactant le bloc logique fonctionnel (101,501), une mémoire FIFO d'entrée (103) pour alimenter en échantillons le bloc logique fonctionnel (101,501), une mémoire FIFO de sortie (104) pour recevoir des échantillons en sortie du bloc logique fonctionnel (101,501), une mémoire tampon (105) alimentée en échantillons par la mémoire FIFO d'entrée (103), et une unité logique de contrôle (106) apte à commander, l'accès en lecture dans la mémoire FIFO d'entrée (103) et l'accès en écriture dans la mémoire FIFO de sortie (104) et configurée pour, lorsqu'une erreur est détectée par l'unité logique (102,512) de détection d'erreurs transitoires, réinitialiser l'unité logique (102,512) de détection d'erreurs transitoires et le bloc logique fonctionnel (101,501), suspendre l'accès en écriture dans la mémoire FIFO de sortie (104) et basculer l'entrée du bloc logique fonctionnel (101,501) vers la sortie de la mémoire tampon (105).

2. Circuit intégré numérique selon la revendication 1 comprenant un multiplexeur (107) pour connecter l'entrée du bloc logique fonctionnel (101,501) à la mémoire FIFO d'entrée (103) ou à la mémoire tampon (105).

3. Circuit intégré numérique selon la revendication 2 dans lequel l'unité logique de contrôle (106) est configurée pour commander le multiplexeur (107) en fonction du résultat de l'unité logique (102,512) de détection d'erreurs.

4. Circuit intégré numérique selon l'une des revendications précédentes dans lequel la fréquence de l'horloge au sein de l'ensemble logique (120,520) est supérieure à la fréquence moyenne d'écriture dans la mémoire FIFO d'entrée (103)

5. Circuit intégré numérique selon la revendication 4 dans lequel l'activité au sein de l'ensemble logique (120,520) est rendue irrégulière.

6. Circuit intégré numérique selon l'une des revendications 4 ou 5 dans lequel le rythme Ra des traitements au sein de l'ensemble logique (120,520) est commandé par l'unité logique de contrôle (106) au moyen d'un signal d'activation.

7. Circuit intégré numérique selon l'une des revendications 4 à 6 dans lequel le rythme Ra des traitements au sein de l'ensemble logique (120,520) est commandé par l'unité logique de contrôle (106) en fonction du niveau de remplissage de la mémoire FIFO de sortie (104) ou d'une détection d'erreur signalée par l'unité logique (102,512) de détection d'erreurs transitoires.

8. Circuit intégré numérique selon la revendication 7 dans lequel l'unité logique de contrôle (106) est configurée pour modifier le rythme Ra des traitements au sein de l'ensemble logique (120,520) en fonction d'une comparaison du niveau de remplissage de la mémoire FIFO de sortie (104) à au moins trois seuils.

9. Circuit intégré numérique selon l'une des revendications précédentes dans lequel la mémoire FIFO d'entrée (103) et la mémoire FIFO de sortie (104) sont dimensionnées pour stocker au moins $p*L_p$ données, avec p le nombre maximum d'erreurs consécutives tolérables impactant en rafale le bloc logique fonctionnel (101,501) et $L_p$ une estimée de la latence du bloc logique fonctionnel.

10. Circuit intégré numérique selon l'une des revendications précédentes dans lequel la taille de la mémoire tampon (105) dépend de la latence du bloc logique fonctionnel (101,501).

11. Circuit intégré numérique selon l'une des revendications précédentes dans lequel l'unité logique (102) de détection d'erreurs transitoires comprend un bloc logique fonctionnel redondant (110) et une unité de comparaison (111) des résultats produits respectivement par le bloc logique fonctionnel (101,501) et le bloc logique fonctionnel redondant (110).

12. Circuit intégré numérique selon l'une des revendications précédentes dans lequel le bloc logique fonctionnel (101,501) est à latence constante.

13. Circuit intégré numérique selon l'une des revendications 1 à 11 dans lequel le bloc logique fonctionnel (501,603) est pourvu d'au moins une seconde entrée ($E_2$) et d'au moins une seconde sortie ($S_2$) pour, lorsqu'elles sont reliées entre elles, réaliser au moins une boucle de réaction externe (620), ledit ensemble logique (520) comprend au moins une seconde mémoire tampon (502) alimentée en échantillons par ladite au moins une seconde sortie ($S_2$) du bloc logique fonctionnel (501,603), l'unité logique de contrôle (106) étant configurée pour, lorsqu'une erreur est détectée par l'unité logique (512) de détection d'erreurs transitoires, basculer ladite au moins une seconde entrée ($E_2$) du bloc logique fonctionnel (501,603) de ladite au moins une seconde sortie ($S_2$) du bloc logique fonctionnel (501,603) vers la sortie de ladite au moins une seconde mémoire tampon (502).

14. Circuit intégré numérique selon la revendication 13 dans lequel ledit ensemble logique (520) comprend au moins un second multiplexeur (503) pour connecter ladite au moins une seconde entrée ($E_2$) du bloc logique fonctionnel (501,603) à ladite au moins une seconde sortie ($S_2$) du bloc logique fonctionnel (501,603) ou à ladite au moins une seconde mémoire tampon (502).

15. Circuit intégré numérique selon la revendication 14 dans lequel l'unité logique de contrôle (106) est configurée pour commander le second multiplexeur (503) de chaque ensemble en fonction du résultat de l'unité logique (512) de détection d'erreurs.

16. Circuit intégré numérique selon l'une des revendications précédentes comprenant une pluralité desdits ensembles logiques (201,202,203) et dans lequel une mémoire FIFO d'entrée ($FIFO_{i1}$) d'un premier ensemble logique (202) est une mémoire FIFO de sortie pour un deuxième ensemble logique (201) situé en amont.

**Patentansprüche**

1. Digitale integrierte Schaltung, die eine Logikbaugruppe (120, 520) umfasst, die einen funktionellen Logikblock (101, 501), eine Logikeinheit (102, 512) zum Erkennen transitorischer Fehler, die den funktionellen Logikblock (101, 501) beeinflussen, einen FIFO-Eingangsspeicher (103) zum Versorgen des funktionellen Logikblocks (101, 501) mit Samples, einen FIFO-Ausgangsspeicher (104) zum Empfangen von vom funktionellen Logikblock (101, 501) ausgegebenen Samples, einen Pufferspeicher (105), der vom FIFO-Eingangsspeicher (103) mit Samples versorgt wird, und eine Steuerlogikeinheit (106) umfasst, die den Lesezugriff im FIFO-Eingangsspeicher (103) und den Schreibzugriff im FIFO-Ausgangsspeicher (104) steuern kann und so konfiguriert ist, dass sie, wenn von der Logikeinheit (102, 512) zum Erkennen transitorischer Fehler ein Fehler erkannt wird, die Logikeinheit (102, 512) zum Erkennen transitorischer Fehler und den funktionellen Logikblock (101, 501) neu initialisiert, den Schreibzugriff im FIFO-Ausgangsspeicher (104) suspendiert und den Eingang des funktionellen Logikblocks (101, 501) auf den Ausgang des Pufferspeichers (105) umschaltet.

2. Digitale integrierte Schaltung nach Anspruch 1, die einen Multiplexer (107) zum Verbinden des Eingangs des funktionellen Logikblocks (101, 501) mit dem FIFO-Eingangsspeicher (103) oder dem Pufferspeicher (105) umfasst.

3. Digitale integrierte Schaltung nach Anspruch 2, bei der die Steuerlogikeinheit (106) zum Steuern des Multiplexers (107) in Abhängigkeit vom Ergebnis der Fehlererkennung durch die Logikeinheit (102, 512) konfiguriert ist.

4. Digitale integrierte Schaltung nach einem der vorherigen Ansprüche, bei der die Taktfrequenz im Innern der Logikbaugruppe (120, 520) höher ist als die mittlere Schreibfrequenz im FIFO-Eingangsspeicher (103).

5. Digitale integrierte Schaltung nach Anspruch 4, bei der die Aktivität im Innern der Logikbaugruppe (120, 520) unregelmäßig gemacht wird.

6. Digitale integrierte Schaltung nach einem der Ansprüche 4 oder 5, bei der der Ra-Rhythmus der Verarbeitungen im Innern der Logikbaugruppe (120, 520) durch die Steuerlogikeinheit (106) mittels eines Aktivierungssignals gesteuert wird.

7. Digitale integrierte Schaltung nach einem der Ansprüche 4 bis 6, bei der der Ra-Rhythmus der Verarbeitungen im Innern der Logikbaugruppe (120, 520) durch die Steuerlogikeinheit (106) in Abhängigkeit vom Füllniveau des FIFO-Ausgangsspeichers (104) oder einer durch die Logikeinheit (102, 512) zur transitorischen Fehlererkennung signalisierten Fehlererkennung gesteuert wird.

8. Digitale integrierte Schaltung nach Anspruch 7, bei der die Steuerlogikeinheit (106) zum Modifizieren des Ra-Rhythmus der Verarbeitungen im Innern der Logikbaugruppe (120, 520) in Abhängigkeit von einem Vergleich des Füllniveaus des FIFO-Ausgangsspeichers (104) mit mindestens drei Schwellen konfiguriert ist.

9. Digitale integrierte Schaltung nach einem der vorherigen Ansprüche, wobei der FIFO-Eingangsspeicher (103) und der FIFO-Ausgangsspeicher (104) zum Speichern von mindestens $p*L_p$ Daten dimensioniert sind, wobei p die maximale Anzahl von tolerierbaren konsekutiven Fehlern ist, die in Serie den funktionellen Logikblock (101, 501) beeinflussen, und $L_p$ eine Schätzung der Latenz des funktionellen Logikblocks ist.

10. Digitale integrierte Schaltung nach einem der vorherigen Ansprüche, wobei die Größe des Pufferspeichers (105) von der Latenz des funktionellen Logikblocks (101, 501) abhängig ist.

11. Digitale integrierte Schaltung nach einem der vorherigen Ansprüche, bei der die Logikeinheit (102) zur transitorischen Fehlererkennung einen redundanten funktionellen Logikblock (110) und eine Einheit (111) zum Vergleichen der jeweils durch den funktionellen Logikblock (101, 501) und den redundanten funktionellen Logikblock (110) produzierten Ergebnisse umfasst.

12. Digitale integrierte Schaltung nach einem der vorherigen Ansprüche, bei der der funktionelle Logikblock (101, 501) eine konstante Latenz hat.

13. Digitale integrierte Schaltung nach einem der Ansprüche 1 bis 11, bei der der funktionelle Logikblock (501, 603) mit mindestens einem zweiten Eingang ($E_2$) und mindestens einem zweiten Ausgang ($S_2$) versehen ist, um, wenn er zwischen ihnen verbunden ist, mindestens eine externe Reaktionsschleife (620) zu realisieren, wobei die Logikbaugruppe (520) mindestens einen zweiten Pufferspeicher (502) umfasst, der durch den mindestens einen zweiten Ausgang ($S_2$) des funktionellen Logikblocks (501, 603) mit Samples versorgt wird, wobei die Steuerlogikeinheit (106) so konfiguriert ist, dass sie, wenn von der Logikeinheit (512) zum Erkennen transitorischer Fehler ein Fehler erkannt wird, den mindestens einen zweiten Eingang ($E_2$) des funktionellen Logikblocks (501, 603) des mindestens einen zweiten Ausgangs ($S_2$) des funktionellen Logikblocks (501, 603) auf den Ausgang des mindestens einen zweiten Pufferspeichers (502) umschaltet.

14. Digitale integrierte Schaltung nach Anspruch 13, bei der die Logikbaugruppe (520) mindestens einen zweiten Multiplexer (503) zum Verbinden des mindestens einen zweiten Eingangs ($E_2$) des funktionellen Logikblocks (501, 603) mit dem mindestens einen zweiten Ausgang ($S_2$) des funktionellen Logikblocks (501, 603) oder dem mindestens einen zweiten Pufferspeicher (502) umfasst.

15. Digitale integrierte Schaltung nach Anspruch 14, bei der die Steuerlogikeinheit (106) zum Steuern des zweiten Multiplexers (503) jeder Baugruppe in Abhängigkeit vom Ergebnis der Fehlererkennung durch die Logikeinheit (512) konfiguriert ist.

16. Digitale integrierte Schaltung nach einem der vorherigen Ansprüche, die mehrere der Logikbaugruppen (201, 202, 203) umfasst und wobei ein FIFO-Eingangsspeicher ($FIFO_{i1}$) einer ersten Logikbaugruppe (202) ein FIFO-Ausgangsspeicher für die oberhalb befindliche zweite Logikbaugruppe (201) ist.

**Claims**

1. Digital integrated circuit comprising a logic array (120, 520) comprising a functional logic block (101, 501), a logic unit (102, 512) for detecting transient errors affecting the functional logic block (101, 501), an input FIFO memory (103) for supplying the functional logic block (101, 501) with samples, an output FIFO memory (104) for receiving samples output from the functional logic block (101, 501), a buffer memory (105) that is supplied with samples by the input FIFO memory (103), and a logic control unit (106) that is able to control read access to the input FIFO memory (103) and write access to the output FIFO memory (104) and that is configured, when an error is detected by the transient-error-detecting logic unit (102, 512), to reset the transient-error-detecting logic unit (102, 512) and the functional logic block (101, 501) to suspend write access to the output FIFO memory (104) and to switch the input of the functional logic block (101, 501) to the output of the buffer memory (105).

2. Digital integrated circuit according to claim 1, comprising a multiplexer (107) for connecting the input of the functional logic block (101, 501) to the input FIFO memory (103) or to the buffer memory (105).

3. Digital integrated circuit according to claim 2, wherein the logic control unit (106) is configured to control the multiplexer (107) depending on the result of the error-detecting logic unit (102, 512).

4. Digital integrated circuit according to one of the preceding claims, wherein the frequency of the clock within the logic array (120, 520) is higher than the average write frequency in the input FIFO memory (103).

5. Digital integrated circuit according to claim 4, wherein the activity within the logic array (120, 520) is made irregular.

6. Digital integrated circuit according to one of claims 4 or 5, wherein the rhythm Ra of the processing operations within the logic array (120, 520) is controlled by the logic control unit (106) by means of an activation signal.

7. Digital integrated circuit according to one of claims 4 to 6, wherein the rhythm Ra of the processing operations within the logic array (120, 520) is controlled by the logic control unit (106) depending on the fill level of the output FIFO memory (104) or an error detection signalled by the transient-error-detecting logic unit (102, 512).

8. Digital integrated circuit according to claim 7, wherein the logic control unit (106) is configured to modify the rhythm Ra of the processing operations within the logic array (120, 520) depending on a comparison of the fill level of the output FIFO memory (104) to at least three thresholds.

9. Digital integrated circuit according to one of the preceding claims, wherein the input FIFO memory (103) and the output FIFO memory (104) are dimensioned to store at least $p*L_p$ data, where p is the tolerable maximum number of consecutive errors affecting in a burst the functional logic block (101, 501) and $L_p$ is an estimate of the latency of the functional logic block.

10. Digital integrated circuit according to one of the preceding claims, wherein the size of the buffer memory (105) depends on the latency of the functional logic block (101, 501).

11. Digital integrated circuit according to one of the preceding claims, wherein the transient-error-detecting logic unit (102) comprises a redundant functional logic block (110) and a unit for comparing (111) the results produced by the functional logic block (101, 501) and the redundant functional logic block (110), respectively.

12. Digital integrated circuit according to one of the preceding claims, wherein the functional logic block (101, 501) is of constant latency.

13. Digital integrated circuit according to one of claims 1 to 11, wherein the functional logic block (501, 603) is provided with at least one second input ($E_2$) and at least one second output ($S_2$) in order, when they are connected together, to produce at least one external feedback loop (620), and said logic array (520) comprises at least one second buffer memory (502) that is supplied with samples by said at least one second output ($S_2$) of the functional logic block (501, 603), the logic control unit (106) being configured, when an error is detected by the transient-error-detecting logic unit (512), to switch said at least one second input ($E_2$) of the functional logic block (501, 603) from said at least one second output ($S_2$) of the functional logic block (501, 603) to the output of said at least one second buffer memory (502).

**14.** Digital integrated circuit according to claim 13, wherein said logic array (520) comprises at least one second multiplexer (503) for connecting said at least one second input ($E_2$) of the functional logic block (501, 603) to said at least one second output ($S_2$) of the functional logic block (501, 603) or to said at least one second buffer memory (502).

**15.** Digital integrated circuit according to claim 14, wherein the logic control unit (106) is configured to control the second multiplexer (503) of each array depending on the result of the error-detecting logic unit (512).

**16.** Digital integrated circuit according to one of the preceding claims, comprising a plurality of said logic arrays (201, 202, 203) and wherein an input FIFO memory ($FIFO_{i1}$) of a first logic array (202) is an output FIFO memory for a second logic array (201) located upstream.

FIG.1

FIG.2a

FIG.2b

FIG.2c

Niveau de remplissage

$\Phi3$

$\Phi1$

$\Phi2$

N

$t_0$    $t_1$    $t_2$    temps

$T_{reprise}$    $T_{remplissage\ FIFO}$

# FIG.3a

Niveau de remplissage

$2*N$

$\Phi1$

$\Phi2$

$\Phi3$

N

$t_0$    $t_1$    $t_2$    temps

$T_{reprise}$    $T_{remplissage\ FIFO}$

# FIG.3b

401  404  402  405  403

## FIG.4a

410  411

## FIG.4b

FIG.5

FIG.6a

FIG.6b

FIG.6c

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 2004219739 A1

**Littérature non-brevet citée dans la description**

• **FRÉDÉRIC AMIEL.** Power consumption improvement with residue code for fault tolerance on SRAM FPGA. ISEP

• **F. GUSMAO DE LIMA KASTENSMIDT.** Designing fault-tolerant techniques for SRAM-based FPGAs. *IEEE design & test of computers*